# NEUE EUROPÄISCHE PATENTSCHRIFT

(11) **EP 0 701 926 B2**
(45) Veröffentlichungstag und Bekanntmachung des Hinweises auf die Entscheidung über den Einspruch: **28.07.2004**
(45) Hinweis auf die Patenterteilung: 03.11.1999
(21) Anmeldenummer: 95113427.9
(22) Anmeldetag: 26.08.1995
(51) Int. Cl.: B60R 16/02

(54) **Multifunktions-Bedieneinrichtung**
Multifunction control device
Dispositif de commande multifonctions

(30) Priorität: 13.09.1994 DE 4432527
(43) Veröffentlichungstag der Anmeldung: 20.03.1996
(73) Patentinhaber: Volkswagen Aktiengesellschaft, 38436 Wolfsburg (DE); SIEMENS AKTIENGESELLSCHAFT, 81541 München (DE)
(72) Erfinder: Ebner, Roland, Dipl.-Ing., D-93170 Bernhardswald (DE); Eichmann, Falk, Dipl.-Ing., D-38302 Wolfenbüttel (DE); Spreitzer, Wilhelm, Dipl.-Ing., D-93057 Regensburg (DE); Nitzsche, Ulf, Dr., D-38108 Braunschweig (DE); Foerster, Robert, Dipl.-Ing., D-93086 Wörth (DE)

(56) Entgegenhaltungen:
- EP-A- 0 057 892
- EP-A- 0 366 132
- DE-A- 3 628 333
- DE-A- 3 702 539
- DE-A- 3 737 087
- DE-A- 4 033 574
- DE-C- 3 514 438
- DE-U- 9 301 031
- US-A- 5 017 916
- US-A- 5 239 700
- Bedienungsanleitung Berlin RCM 303A, Blaupunkt Werke GmbH 4/94
- "Der grosse Unterschied im Automobil: Berlin RCM 303A"Blaupunkt Werke GmbH, äussere Umschlagsseiten
- "Berlin-Händler, Berlin-Systemspezialisten" 30.05.1994, Internes Dokument (Auszug), Blaupunkt-Werke GmbH
- Rechnung an die Franz Bauer GmbH & Co., 84428 Buchbach, vom 29.06.1994

## Beschreibung

Die Erfindung betrifft eine Multifunktions-Bedieneinrichtung und Unterfunktionen.

Eine derartige Multifunktions-Bedieneinrichtung für Kraftfahrzeuge ist aus der gattungsbildenden europäischen Patentanmeldung EP 366 132 A2 bekannt, bei der ein einziger bidirektionaler Drehschalter mit einer axialen Bewegung dazu dient, Funktionsgruppen auszuwählen und mit Hilfe der Enter-Funktion einzustellen und anschließend daran innerhalb der jeweiligen Funktionsgruppe die zugehörige Funktion auf dieselbe Weise auszuwählen. Bei der bekannten Bedienenrichtung besteht jedoch die Gefahr, insbesondere bei einer Vielzahl von zu bedienenden Steuer- bzw. Zusatzgeräten, daß durch die Handhabung nur eines einzigen Bedienelementes sowohl für die Funktionsgruppen als auch für die individuellen Funktionen Fehler in der Auswahl auftreten können und durch die Konzentration auf die Bedienoberfläche die jeweilige Bedienperson vom Umgebungsgeschehen abgelenkt wird. Ferner ist eine Rückkehrfunktion nur durch eine Mehrfach-Betätigung des Drehschalter, Drehung auf ein Zusatzfeld der Bedienoberfläche und Betätigung der Enter-Taste, möglich.

Damit besteht die Aufgabe der Erfindung darin, eine Multifunktions-Bedieneinrichtung zu schaffen, mit deren Hilfe ein Zugriff auch auf komplexe Funktionsgruppen sowie deren untergeordnete Einzelfunktionen auf einfache Weise ohne Ablenkung vom Umgebungsgeschehen handhabbar ist und die weitgehend selbsterklärend aufgebaut ist, so daß sie auch von ungeschulten Personen bedient werden kann.

Die Aufgabe wird bei einer gattungsgemäßen Bedieneinrichtung durch die kennzeichnenden Merkmale des Patentanspruchs gelöst. Vorteilhafte Ausgestaltungen und Weiterbildungen sind in den Unteransprüchen dargestellt

Nach der Erfindung erfolgt nur noch die Anwahl der den einzelnen Funktionsgruppen untergeordneten individuellen Funktionen mittels eines einzigen ersten Bedienelementes. Für die Auswahl der einzelnen Funktionsgruppen sind zweite den Funktionsgruppen zugeordnete Bedienelemente ohne Doppelbelegung vorgesehen, wobei vorteilhafterweise das erste Bedienelement als ein bidirektionaler Drehschalter mit einer durch eine axiale Bewegung des Drehschalters oder eines im Drehschalter angeordneten weiteren Bedienelementes auslösbaren Enter-Funktion und die zweiten Bedienelemente als Drucktasten ausgebildet sind.

Da für den Zugriff auf primäre Funktionsgruppen auf eine Doppelbelegung von Bedienelementen verzichtet wird, ist es bei Beibehaltung der Übersichtlichkeit der Anordnung der Bedienelemente auch für ungeübte Personen möglich, ohne Ablenkung vom Umgebungsgeschehen mit der Multifunktions-Bedieneinrichtung zu arbeiten.

Gemäß einer Ausgestaltung der Erfindung ist der bidirektionale Drehschalter als Inkrementalgeber mit Raststufen, die einzelnen Funktionen zugeordnet sind, ausgebildet. Er gestattet somit eine genaue Anwahl der gewünschten Funktionen, die danach mit der Enter-Funktion bestätigt wird. Neben der Raststufen kann weiterhin vorgesehen werden, daß die Auswahlfähigkeit des bidirektionalen Drehschalters in mindestens einer Drehrichtung durch einen auf eine der Funktionen bezogenen Anschlag begrenzt ist, d. h. daß bei Erreichen des ersten und/oder letzten Menüpunktes ein Weiterdrehen des Drehschalters nicht zum Überspringen auf den letzten und/oder ersten Menüpunkt führt.

Eine Weiterbildung sieht vor, daß nach Auswahl einer Funktionsgruppe über eine Betätigung eines der zweiten Bedienelemente eine Rückkehr auf eine der übergeordneten Funktionsgruppen ermöglicht wird, wodurch ein erneuter Zugriff auf die der ausgewählten Funktion übergeordnete Funktionsgruppe oder die Umschaltung auf eine andere Funktionsgruppe erfolgen kann.

Für häufig anzuwählende Funktionen sind zusätzlich dritte Bedienelemente vorgesehen. Dies hat außerdem den Vorteil, daß Funktionen einer Funktionsgruppe, die nach Auswahl einer anderen Funktionsgruppe benötigt werden, jederzeit betätigt werden können.

Die einer Funktionsgruppe zugeordneten individuellen Funktionen werden auf einer oder mehrerer Bedienoberflächen dargestellt, wobei die ausgewählte Funktion graphisch hervorgehoben ist. Eine Möglichkeit besteht dabei darin, die entsprechende Funktion durch eine größere Darstellung hervorzuheben. Als optische Unterstützung des Auswahlvorganges wird die ausgewählte Funktion dem ersten Bedienelement auf der Bedienoberfläche optisch zugeordnet, beispielsweise rolliert ein balkenförmiger Zeiger, der auf der Bedienoberfläche bis zum Bedienelement verlängert ist

Wenn keine Funktionsgruppe ausgewählt ist, beim Einschalten der Bedieneinrichtung oder in Abhängigkeit eines über ein Bedienelement vorgebbares Signal, werden nach einer Ausgestaltung der Erfindung ausgewählte Informationen aus einzelnen Funktionsgruppen auf der Bedienoberfläche angezeigt. Außerdem kann vorgesehen sein, daß nach Anwahl einer Funktionsgruppe wichtige Informationen andere Funktionsgruppen auf der Bedienoberfläche erscheinen.

Informations-, Audio- und Kommunikationsgeräte erlangen beim Kraftfahrzeug immer größere Bedeutung. Dies bedingt eine große Anzahl von Bedien- und Anzeigefunktionen, welche als autarke Einzellösungen nicht mehr unterzubringen sind. Der Gegenstand der Erfindung ist somit vorteilhaft im Kraftfahrzeug einsetzbar.

Nachfolgend soll die Erfindung anhand eines Ausführungsbeispiels näher beschrieben werden. Die zugehörigen Zeichnungen zeigen:
- Figur 1: eine Frontansicht der Multifunktions-Bedieneinrichtung,
- Figur 2: eine Bedienoberfläche der Funktionsgruppe "Radio",
- Figur 3: eine Bedienoberfläche der Funktion ''Klang'' mit Unterfunktionen,
- Figur 4: eine Bedienoberfläche der Funktionsgruppe "Telefon",
- Figur 5: eine Bedienoberfläche zur Eingabe von Rufnummern und
- Figur 6: eine Bedienoberfläche zur Eingabe von Buchstaben zur Kennzeichnung abzuspeichernder Rufnummern.

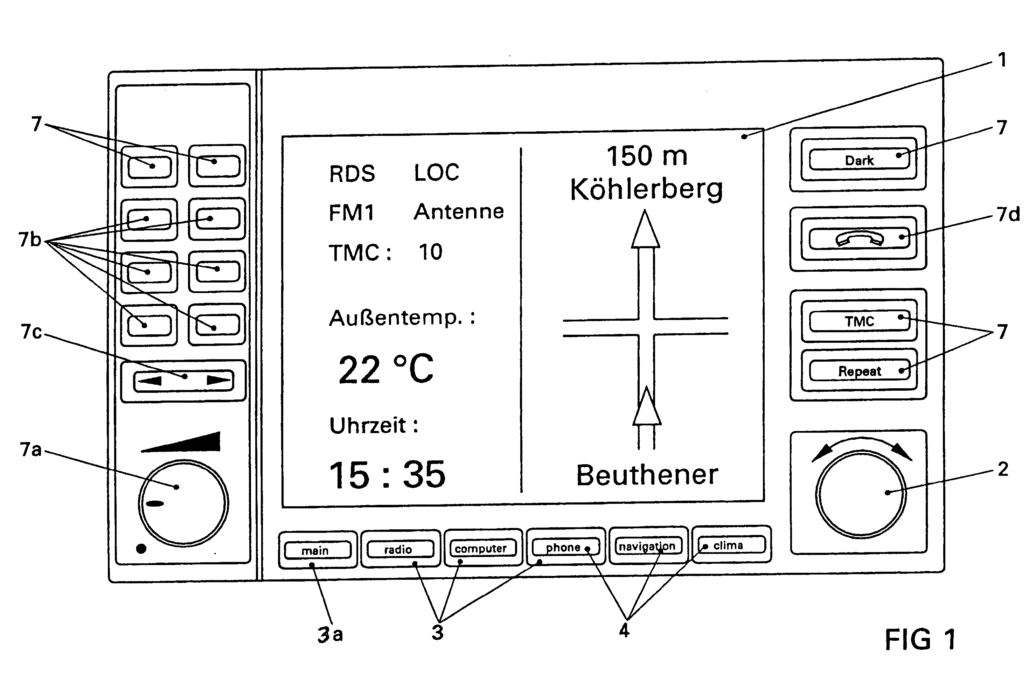

Die in Figur 1 dargestellte Multifunktions-Bedieneinrichtung dient zur Steuerung mehrerer in einem Kraftfahrzeug eingesetzter Steuer- bzw. Zusatzgeräte, wie Radio, Bordcomputer, Telefon, Navigationseinrichtung und Teilen der Klimaanlage. Sie weist einen Bildschirm mit einer Bedienoberfläche auf, auf der nach dem Einschalten der Bedieneinrichtung oder nach Vorgabe eines Steuersignals main durch die Drucktaste 3a wichtige Informationen wie der angewählte Sender des Radios, die erhaltenen Meldungen des Verkehrsfunks, die Außentemperatur und die aktuelle Uhrzeit sowie ein Hinweise auf die nächste erforderliche Aktion des Fahrzeuglenkers in Abhängigkeit vom Betriebszustand der Funktionsgruppe "Navigation 4" gezeigt sind. Weiterhin sind als Drucktasten ausgebildete zweite Bedienelemente 3 für die Auswahl der einzelnen Funktionsgruppen 4 sowie ein als bidirektionaler Drehschalter ausgebildetes erstes Bedienelement 2 für die Auswahl der den Funktionsgruppen 4 untergeordneten Funktionen 5 vorgesehen. Der Drehschalter 2 weist in beiden Richtungen Raststufen auf, die jeweils den einzelnen Funktionen zugeordnet sind, und ist in seiner Auswahlfähigkeit in beiden Richtungen durch einen Anschlag auf die erste und auf die letzte Funktion einer Bedienoberfläche 1 begrenzt, wodurch ein Überspringen dieser beiden Funktionen vermieden wird. Der Anschlag ist dabei jedoch nicht mechanisch, sondern rein softwaremäßig realisiert. Nach Auswahl der gewünschten Funktion wird durch ein Antippen des Drehschalters 2 und seine dadurch ausgelöste axiale Bewegung eine Enter-Funktion ausgelöst und damit die Funktion entweder durchgeführt oder in eine entsprechende Unterfunktion gesprungen.

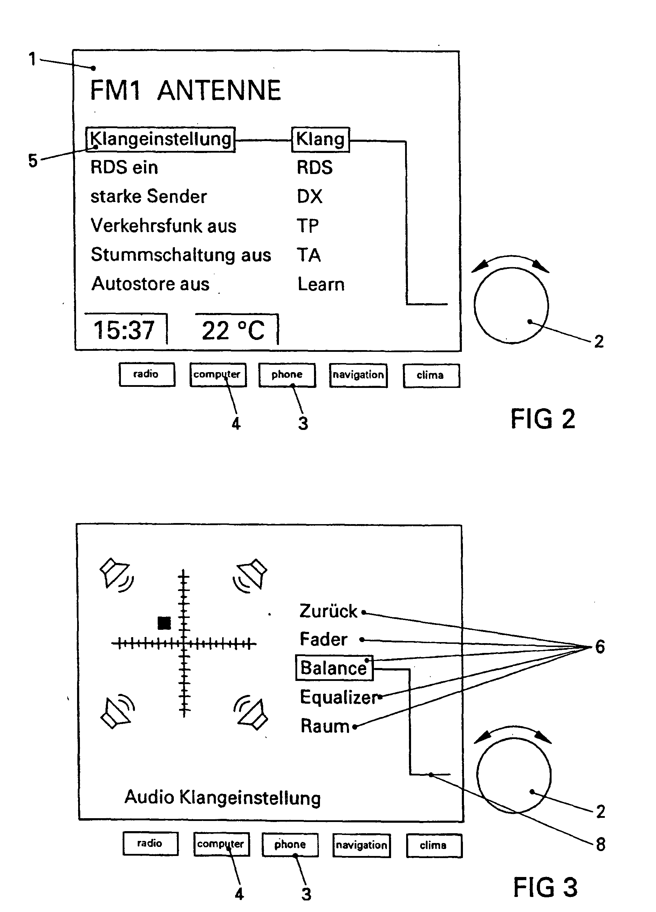

Einige oft benutzte Funktionen bzw. solche Funktionen einer Funktionsgruppe 4, die auch bei nicht direkter Anwahl der Funktionsgruppe zur Anwendung kommen, werden durch vierte Bedienelemente 7 betätigt. Im Ausführungsbeispiel ist der Lautstärkesteller 7a zu nennen, mit dessen Hilfe in jeder Funktionsgruppe die Lautstärke des Radios verändert werden kann und durch den auch das Radio ein- und ausgeschaltet wird. Weiterhin werden auch abgespeicherte Sender durch weitere Bedienelemente 7b aufgerufen oder mit Hilfe des Bedienelementes 7c ein Sendersuchlauf gestartet. Soll jedoch an der Einstellung der Funktionsgruppe "Radio" 4 selbst etwas geändert werden, kann über die zugeordnete Drucktaste 3 die Funktionsgruppe ausgewährt werden. Auf dem Bildschirm erscheint eine Bedienoberfläche 1 mit auswählbaren Funktionen 5, wie sie in Figur 2 dargestellt ist. Über den bidirektionalen Drehschalter 2 können nun einzelne Funktionen ausgewählt werden, die wiederum, wie beispielsweise bei der Funktion "Klangeinstellung" Bedienoberflächen 1 mit verschiedenen Unterfunktionen 6 aufrufen können (Figur 3). Zur optischen Unterstützung des Auswahlvorganges verbindet ein graphisch oder farblich hervorgehobener, balkenförmiger Zeiger 8 in den Bedienoberflächen die ausgewählten Funktionen (5;6) mit dem bidirektionalen Drehschalter 2. Eine Rückkehr in die Bedienoberfläche der übergeordneten Funktionsgruppe "Radio" 4 oder einer anderen Funktionsgruppe wird durch das Antippen der ihr zugeordneten Drucktaste 3 erreicht.

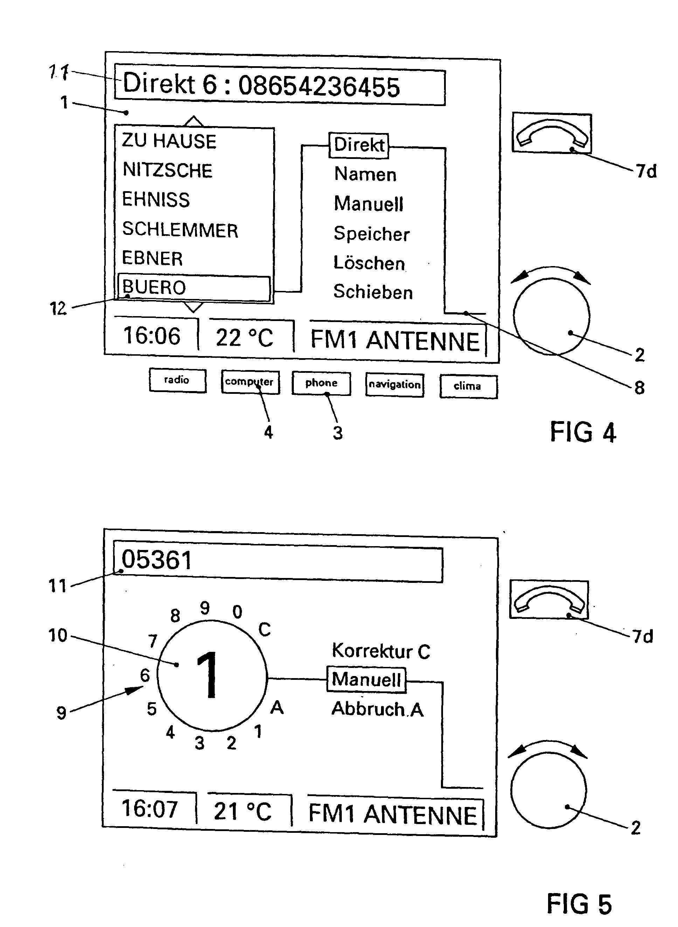

Nach Betätigung der Funktionsgruppe "Telefon" 4 erscheint auf dem Bildschirm die entsprechende Bedienoberfläche 1, wie sie in Figur 4 gezeigt ist. Neben der Drucktaste 3 ist für diese Funktionsgruppe 4 ein weiteres Bedienelement 7d vorgesehen, mit der für abgespeicherte oder auch manuell über den Drehschalter 2 eingebbare Rufnummern der Wahlvorgang ausgelöst und ein ankommendes Gespräch entgegengenommen werden kann.

Nach Erscheinen der Bedienoberfläche steht der mit dem Drehschalter 2 optisch verbundene Zeiger 8 auf der Funktion "Direkt" 5, die eine Auswahl aus verschiedenen gespeicherten Rufnummern 11 anhand einer Liste zugeordneter Namen 12 zuläßt. Die Wartung dieser Liste erfolgt über weitere Funktionen. Zur manuellen Eingabe von Rufnummern, die nicht abgespeichert sind, wird die Funktion "Manuell" ausgewählt; es erscheint auf dem Bildschirm eine Bedienoberfläche 1 mit einer dem herkömmlichen Telefon nachempfundenen Wählscheibe 9 sowie ein Symbol C zur Korrektur der letzten Eingabe und ein Symbol A zum Beenden der Eingabe. Die Auswahl der Ziffern einer Rufnummer geschieht durch Drehen des bidirektionalen Drehschalters 2 und anschließendes Auslösen der Enter-Funktion. Im Feld 10 innerhalb einer Wählscheibe 9 wird die aktuell selektierte Ziffer vergrößert angezeigt. Gleichzeitig zeigt die Bedienoberfläche die bis dann gewählte Rufnummer 11. Bei Auswahl des Symbols C wir die letzte Ziffer der Rufnummer gelöscht, bei wiederholter Anwahl die vorletzte usw.. Durch Anwahl des Symbols A wird die Eingaberoutine verlassen, wobei die gewählte Rufnummer 11 nicht aus der Anzeige entfernt wird. Das Auslösen des Wahlvorganges kann durch Betätigen des Bedienelementes 7d innerhalb der Eingaberoutine sowie nach Verlassen der Eingaberoutine erfolgen, solange die Rufnummer 11 auf der Bedienoberfläche angezeigt 1 wird.

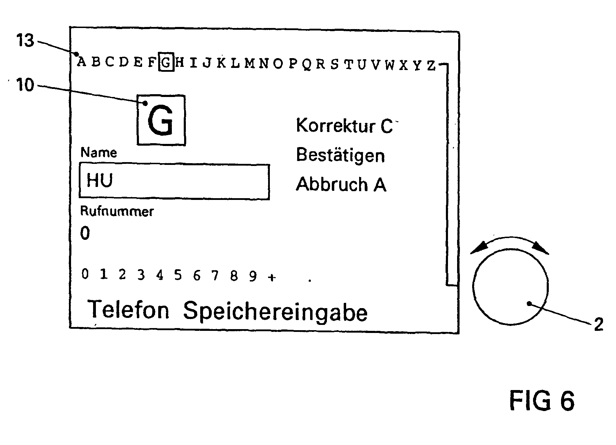

Die Eingabe von Buchstaben erfolgt ähnlich wie die von Ziffern. Auch hier werden die Buchstaben mit Hilfe des bidirektionalen Drehschalters 2 aus einem angezeigten Alphabet 13 ausgewählt und der ausgewählte Buchstabe im Feld 10 zur besseren Übersichtlichkeit vergrößert dargestellt (Figur 6).

Selbstverständlich können mit Hilfe der erfindungsgemäßen, selbsterklärenden Multifunktions-Bedieneinrichtung auch andere als die beschriebenen Funktionsgruppen angesteuert und angezeigt werden. Die Auswahl und Betätigung erfolgt dabei auf ähnliche Weise. Die Vorteile der Multifunktions-Bedieneinrichtung liegen insbesondere in der räumlich-übersichtlichen Zuordnung zwischen der Bedienoberfläche und den Bedienelementen. Bei Anordnung in der Mittelkonsole des Kraftfahrzeuges ist sie gleichermaßen vom Fahrer und vom Beifahrer bedienbar.

## Patentansprüche

1. Multifunktions-Bedieneinrichtung für Kraftfahrzeuge mit einem Bildschirm, bei der Funktionsgruppen (4) zugeordnete individuelle Funktionen (5) auf mehreren Bedienoberflächen (1) des Bildschirms darstellbar sind, wobei mindestens eine den Funktionen Unterfunktionen aufweist, und einem einzigen ersten Bedienelement (2) zur Auswahl der dargestellten individuellen Funktionen und Unterfunktionen innerhalb einer Funktionsgruppe, das zur Bestätigung der ausgewählten Funktion (5) eine Enter-Funktion aufweist, **dadurch gekennzeichnet, daß** eine Auswahl der den individuellen Funktionen (5) übergeordneten Funktionsgruppen (4) über den einzelnen Funktionsgruppen jeweils individuell zugeordnete zweite Bedienelemente (3) erfolgt und nach erfolgter Auswahl einer Funktionsgruppe auf dem Bildschirm auswählbare Funktionen (5) der Funktionsgruppe (4) auf einer Bedienoberfläche (1) dargestellt sind, wobei die über diese zweiten Bedienelemente (3) auswählbare Funktionsgruppen Funktionen (5) mit Unterfunktionen (6) aufweisen.

2. Bedieneinrichtung nach Anspruch 1, **dadurch gekennzeichnet, daß** die zweiten Bedienelemente (3) als Drucktasten ausgebildet sind.

3. Bedieneinrichtung nach Anspruch 1 oder 2, **dadurch gekennzeichnet, daß** das erste Bedienelement (2) für die individuellen Funktionen (5) ein bidirektionaler Drehschalter ist.

4. Bedieneinrichtung nach Anspruch 3, **dadurch gekennzeichnet, daß** die Enter-Funktion des bidirektionalen Drehschalters (2) durch eine axiale Bewegung des Drehschalters oder eines im Drehschalter angeordneten Bedienelementes erfolgt.

5. Bedieneinrichtung nach Anspruch 3 oder 4, **dadurch gekennzeichnet, daß** der bidirektionale Drehschalter (2) Raststufen aufweist, die einzelnen Funktionen (5) zugeordnet sind.

6. Bedieneinrichtung nach einem der Ansprüche 3 bis 5, **dadurch gekennzeichnet, daß** die Auswahlfähigkeit des bidirektionalen Drehschalters (2) mindestens in einer Richtung durch einen auf eine der Funktionen (5) bezogenen Anschlag begrenzt ist

7. Bedieneinrichtung nach einem der Ansprüche 1 bis 6, **dadurch gekennzeichnet, daß** nach Auswahl einer Funktionsgruppe (4) über eine Betätigung eines der zweiten Bedienelemente (3) eine Rückkehr auf eine der übergeordneten Funktionsgruppen (4) möglich ist.

8. Bedieneinrichtung nach einem der Ansprüche 1 bis 7, **dadurch gekennzeichnet, daß** für häufig anzuwählende Funktionen (5;6) zusätzliche dritte Bedienelemente (7a bis 7d) vorgesehen sind.

9. Bedieneinrichtung nach einem der Ansprüche 1 bis 8, **dadurch gekennzeichnet, daß** die Ober das Bedienelement (2) ausgewählte Funktion (5) bzw. Unterfunktion (6) auf der Bedienoberfläche (1) graphisch hervorgehoben ist.

10. Bedieneinrichtung nach Anspruch 9, **dadurch gekennzeichnet, daß** die ausgewählte Funktion (5) bzw. Untertunktion (6) durch eine größere Darstellung hervorgehoben ist.

11. Bedieneinrichtung nach einem der Ansprüche 1 bis 10, **dadurch gekennzeichnet, daß** die ausgewählte Funktion (5) bzw. Unterfunktion (6) dem ersten Bedienelement (2) auf der Bedienoberfläche (1) optisch zugeordnet ist

12. Bedieneinrichtung nach Anspruch 11, **dadurch gekennzeichnet, daß** die optische Zuordnung der ausgewählten Funktion (5) bzw. Unterfunktion (6) zu dem ersten Bedienelement (2) über einen rollierenden, baikenförmigen Zeiger (8), der auf der Bedienoberfläche (1) bis zum Bedienelement (2) verlängert ist, erfolgt.

13. Bedieneinrichtung nach einem der Ansprüche 1 bis 12, **dadurch gekennzeichnet, daß** in Abhängigkeit eines vorgebbaren Steuersignals (main) ausgewählte Informationen aus einzelnen Funktionsgruppen (4) anzeigbar sind.

14. Bedieneinrichtung nach einem der Ansprüche 1 bis 13, **dadurch gekennzeichnet, daß** innerhalb einer Funktionsgruppe (4) wichtige Informationen anderer Funktionsgruppen dargestellt werden.

15. Kraftfahrzeug, **dadurch gekennzeichnet, daß** eine Bedienvorrichtung nach einem der Ansprüche 1 bis 14 vorgesehen ist

## Claims

1. Multi-purpose control device for motor vehicles having an image screen, wherein individual functions (5) allocated to function groups (4) can be illustrated on a plurality of control surfaces (1) of the image screen, wherein at least one of the functions includes sub-functions and having a single first control element (2) to select the illustrated individual functions and sub-functions within a function group, which control element has an enter function to confirm the selected function (5), **characterised in that** a selection of the function groups (4) superordinated to the individual functions (5) is made by means of second control elements (3) individually allocated to the individual function groups and after having selected a function group on the image screen selectable functions (5) of the function group (4) are displayed on a control surface (1), wherein the function groups which can be selected using these second control elements (3) comprise functions (5) with sub-functions (6)

2. Control device according to claim 1, **characterised in that** the second control elements (3) are designed as push buttons.

3. Control device according to claim 1 or 2, **characterised in that** the first control element (2) for the individual functions (5) is a bi-directional rotary switch.

4. Control device according to claim 3, **characterised in that** the enter function of the bi-directional rotary switch (2) is achieved by an axial movement of the rotary switch or of a control element disposed in the rotary switch.

5. Control device according to claim 3 or 4, **characterised in that** the bi-directional rotary switch (2) has latching steps which are allocated to individual functions (5).

6. Control device according to one of claims 3 to 5, **characterised in that** the selectability of the bi-directional rotary switch (2) is limited at least in one direction by a stop related to one of the functions (5).

7. Control device according to one of claims 1 to 6, **characterised in that** after selecting a function group (4) by actuation of one of the second control elements (3) it is possible to return to one of the superordinated function groups (4).

8. Control device according to one of claims 1 to 7, **characterised in that** additional third control elements (7a to 7d) are provided for frequently selected functions (5; 6).

9. Control device according to one of claims 1 to 8, **characterised in that** the function (5) or sub-function (6) selected by means of the control element (2) is graphically emphasised on the control surface (1).

10. Control device according to claim 9, **characterised in that** the selected function (5) or sub-function (6) is emphasised by being shown enlarged.

11. Control device according to one of claims 1 to 10, **characterised in that** the selected function (5) or sub-function (6) is optically associated with the first control element (32) on the control surface (1).

12. Control device according to claim 11, **characterised in that** the optical association of the selected function (5) or sub-function (6) with the first control element (2) takes place by means of a rolling bar-like indicator (8) which extends over the control surface (1) as far as the control element (2).

13. Control device according to one of claims 1 to 12, **characterised in that** information from individual functions groups (4), which is selected in dependence upon a predeterminable control signal (main) can be indicated.

14. Control device according to one of claims 1 to 13, **characterised in that** within one function group (4) important information from other function groups is displayed.

15. Motor vehicle, **characterised in that** a control device according to one of claims 1 to 14 is provided.

## Revendications

1. Dispositif de commande multifonction pour véhicules à moteur avec un écran, dans lequel on peut représenter des fonctions individuelles (5) associées à des groupes de fonctions (4), sur plusieurs surfaces de commande (1) de l'écran, au moins l'une des fonctions comportant des sous-fonctions, et avec un unique premier élément de commande (2) servant à sélectionner les fonctions individuelles et sous-fonctions représentées à l'intérieur d'un groupe de fonctions, élément qui présente une fonction d'entrée pour confirmer la fonction sélectionnée (5), **caractérisé en ce qu'**une sélection des groupes de fonctions (4) d'ordre supérieur aux fonctions individuelles (5) a lieu au moyen de deuxièmes éléments de commande (3), qui sont associés individuellement aux différents groupes de fonctions, et **en ce que** des fonctions (5) d'un groupe de fonctions (4) qui peuvent être sélectionnées après la sélection du groupe de fonctions sur l'écran sont représentées sur une surface de commande (1), les groupes de fonctions pouvant être sélectionnés au moyen de ces deuxièmes éléments de commande (3) comportant des fonctions (5) avec sous-fonctions (6).

2. Dispositif de commande selon la revendication 1, **caractérisé en ce que** les seconds éléments de commande (3) sont constitués sous la forme de boutons-poussoirs.

3. Dispositif de commande selon la revendication 1 ou 2, **caractérisé en ce que** le premier élément de commande (2) pour les fonctions individuelles (5) est un commutateur rotatif bidirectionnel.

4. Dispositif de commande selon la revendication 3, **caractérisé en ce que** la fonction d'entrée du commutateur rotatif bidirectionnel (2) a lieu au moyen d'un mouvement axial du commutateur rotatif ou d'un élément de commande disposé dans le commutateur rotatif.

5. Dispositif de commande selon la revendication 3 ou 4, **caractérisé en ce que** le commutateur rotatif bidirectionnel (2) présente des crans d'arrêt, qui sont associés à des fonctions individuelles (5).

6. Dispositif de commande selon l'une des revendications 3 à 5, **caractérisé en ce que** la possibilité de sélection du commutateur rotatif bidirectionnel (2) est limitée au moins dans un sens par une butée se rapportant à l'une des fonctions (5).

7. Dispositif de commande selon l'une des revendications 1 à 6, **caractérisé en ce qu'**après la sélection de l'un des groupes de fonctions (4) au moyen d'un actionnement de l'un des deuxièmes éléments de commande (3), un retour à l'un des groupes de fonctions (4) d'ordre supérieur est possible.

8. Dispositif de commande selon l'une des revendications 1 à 7, **caractérisé en ce qu'**il est prévu, pour des fonctions à choisir souvent (5 ; 6), des troisièmes éléments additionnels de commande (7a à 7d).

9. Dispositif de commande selon l'une des revendications 1 à 8, **caractérisé en ce que** la fonction (5) ou la sous-fonction (6) sélectionnée au moyen de l'élément de commande (2) est accentuée graphiquement sur la surface de commande (1).

10. Dispositif de commande selon la revendication 9, **caractérisé en ce que** la fonction (5) ou la sous-fonction (6) sélectionnée est accentuée par une représentation plus grande.

11. Dispositif de commande selon l'une des revendications 1 à 10, **caractérisé en ce que** la fonction (5) ou la sous-fonction (6) sélectionnée est associée visuellement au premier élément de commande (2) sur la surface de commande (1).

12. Dispositif de commande selon la revendication 11, **caractérisé en ce que** l'association visuelle de la fonction (5) ou la sous-fonction (6), sélectionnée, au premier élément de commande (2) a lieu au moyen d'un indicateur roulant (8), en forme de barre, qui est prolongé sur la surface de commande (1) jusqu'à l'élément de commande (2).

13. Dispositif de commande selon l'une des revendications 1 à 12, **caractérisé en ce que** des informations sélectionnées en fonction d'un signal de commande prédéfinissable (main) peuvent être indiquées à partir de différents groupes de fonctions (4).

14. Dispositif de commande selon l'une des revendications 1 à 13, **caractérisé en ce que** des informations importantes d'autres groupes de fonctions sont représentées à l'intérieur d'un groupe de fonctions (4).

15. Véhicule à moteur, **caractérisé en ce qu'**il est prévu un dispositif de commande selon l'une des revendications 1 à 14.
